# EUROPEAN PATENT APPLICATION

(11) **EP 2 096 588 A1**
(43) Date of publication of application: **02.09.2009**
(21) Application number: 08152189.0
(22) Date of filing: 29.02.2008
(51) Int. Cl.: G06Q 10/00

(54) **Designation of delegate for modifying an electronic meeting definition defined using electronic calendaring software**

(71) Applicant: Research In Motion Limited, Waterloo, Ontario N2L 3W8 (CA)
(72) Inventor: May, Darrell Reginald, Waterloo Ontario N2V 2K6 (CA); Bredin, Robert, Guelph Ontario N1H 5X1 (CA)
(74) Representative: Rickard, David John

(57) **Abstract**

A command identifying an electronic meeting definition created by a meeting organizer, using electronic calendaring software, and a modification to be made thereto is received from a user who is distinct from the meeting organizer. Based on the identified meeting definition, the user is determined to be a delegate of the meeting organizer for modifying the identified meeting definition, but not necessarily other meeting definitions. Based on that determination, a command for causing the software to modify the meeting definition is generated. The generated command is made to appear to the software as having originated from a user having sufficient privileges to modify the meeting definition (e.g. the meeting organizer). Delegates may be designated on a meeting-specific basis through a user interface. The designation may result in storage of a data record for future use in determining whether commands to modify that meeting definition shall be effected.

## Description

The present disclosure pertains generally to electronic calendaring software, and more particularly to the designation of a delegate for modifying an electronic meeting definition defined using electronic calendaring software.

Collaborative software (or "groupware") applications, i.e. software applications designed to help a group of people involved in a common task achieve their goals, are ubiquitous in the contemporary business world. Collaborative software typically includes such capabilities as electronic calendaring, project management tools, workflow tools, video or data conferencing, electronic mail (email), and instant messaging for example, with the exact set of capabilities varying from vendor to vendor. Commercially available collaborative software includes, at the time of this writing, Microsoft® Exchange Server, Novell® Group Wise®, and IBM® Lotus Domino®, to name but a few. Each person in the group typically accesses the collaborative software using his or her electronic user account, which may be a network account on a corporate computer network, having a unique usemame and password for example.

Using the electronic calendaring component of a collaborative software application, a meeting organizer (using his or her electronic user account) may schedule a meeting and specify a list of invitees. The act of scheduling the meeting automatically causes an invitation to be sent to each invitee, e.g. via email to each invitee's user account. When an invitee accepts the invitation, the scheduled meeting appears within the invitee's calendar in a client software application, which may either be a software application executed on a wired desktop computer (e.g. Microsoft® Outlook® client) or a software application executed on a wireless communication device (e.g. Pocket Outlook™).

The organizer may opt to post meeting-related documents to a repository that is accessible only to meeting invitees.

After electronically scheduling a meeting, the meeting organizer may later decide that some aspect of the scheduled meeting should be modified. For example, the meeting length may need to be extended or additional meeting-related documents may need to be posted to the repository. By default operation of conventional collaborative software applications, only the organizer of the meeting is permitted to modify the scheduled meeting in this way. If the organizer wishes to delegate the responsibility of making the necessary modification to another user, the organizer could use the collaborative software application to designate a delegate who would then be able to modify the meeting as desired. However, in conventional collaborative software applications this designation would be a universal ("blanket") designation that would not be limited to just that meeting. As such, modify permissions may inadvertently or undesirably be granted to other meetings. Moreover, delegated privileges may unnecessarily remain in place even after the meeting has concluded, unless the meeting organizer has remembered to revoke them. Finally, delegation capabilities may be limited or unavailable when the electronic calendaring software is accessed by way of a wireless communication device-based client. Therefore, a meeting organizer, having only a wireless communication device, who is desirous of designating a delegate, say, during an ongoing meeting, may be unable to do so.

The above-noted disadvantages may impact upon not only the modification electronic meeting definitions defined using the electronic calendaring component of a collaborative software application, but generally upon the modification of electronic meeting definitions scheduled using any electronic calendaring software that permits meetings to be scheduled with other users.

A solution which mitigates or obviates one or more of the above-noted disadvantages would be desirable.

### GENERAL

Briefly, in an exemplary embodiment, a meeting organizer using a wireless communication device may invoke an "appoint delegate" command in respect of an electronic meeting definition representing a (possibly recurring) meeting scheduled using electronic calendaring software. The meeting may have been scheduled by the meeting organizer, using his or her electronic user account (e.g. a user account on a corporate computer network), through intercommunication with the server-based electronic calendaring software. The purpose of the command may be to designate another electronic user account, such as a meeting invitee's electronic user account, as a delegate account of the meeting organizer account for modifying that electronic meeting definition, but not necessarily for modifying other electronic meeting definitions. For convenience, this may be referred to simply as "designating a delegate for the meeting organizer" or using other language that does not specifically refer to "electronic user accounts", "user accounts" or "accounts" (the latter two terms being a common shorthand expressions for "electronic user accounts"). By way of a graphical user interface, the meeting organizer may be prompted for various delegation parameters. The delegation parameters include the identity of a user to act as the delegate, and may further include an enumeration of delegated privileges (optional) and a delegation expiry time (also optional).

The command and parameters may be sent to a middleware server, which is where wireless communication device-originated commands destined for the server-based electronic calendaring software are conventionally sent before being relayed to, and implemented by, the electronic calendaring software. The latter software may be a component of a collaborative software application.

However, because conventional electronic calendaring software does not support meeting-specific or time-limited delegation, this particular command cannot simply be relayed to the electronic calendaring software for implementation. Rather, special processing may be performed at the middleware server in order to configure it to communicate any future commands that originate from the delegate's account as though they originate from the meeting organizer's account (or another user account with like privileges), in order to "fool" the electronic calendaring software into accepting and performing the commands. This is despite the fact that the delegate who originated the command is neither the meeting organizer nor a "universal delegate" of the meeting organizer capable of modifying all meetings scheduled by that organizer.

In particular, the middleware server may create a rule specifying that the delegate account shall be authorized to modify the identified electronic meeting definition with the enumerated privileges (if enumerated) until the specified time of expiry of the delegation (if any). At the time of the designation, the middleware server may seek confirmation from the prospective delegate that he/she accepts the designation or may at least send a notification message to the delegate's account to inform the delegate of the designation.

Thereafter, each time a command to modify an electronic meeting definition is received from a user account that is not the meeting organizer account (i.e. from a user who did not create that electronic meeting definition in this example), the middleware server may perform a lookup in its rules database to determine whether the user is a delegate for modifying the specified meeting definition and to confirm that the delegation has not expired (if an expiry time was set). Upon determining that the user is in fact a delegate who is authorized to make the requested modification to the meeting definition, the middleware server may generate a version of the command understood by the electronic calendaring software that appears to originate from the meeting organizer (or a user having like privileges), and sends the generated command to the electronic calendaring software for implementation. This operation may continue until the delegation is revoked or until the delegation expires (if an expiry time has been specified). Because the designation is meeting-specific, a request or command to modify an electronic meeting definition for which no delegate has been designated that originates from anyone other than the organizer will be rejected.

In one aspect of the below-described embodiment, there may be provided a method of modifying an electronic meeting definition created using electronic calendaring software, the method may comprise: receiving a command identifying the electronic meeting definition and a modification to be made thereto, the command originating from a first user account that is distinct from a meeting organizer account used to create the electronic meeting definition; based on the identified electronic meeting definition, determining that the first user account is a delegate account of the meeting organizer account for modifying the identified electronic meeting definition; based on the determining, generating a command for causing the electronic calendaring software to make the modification to the electronic meeting definition, the generating resulting in a generated command, the generated command being made to appear to the electronic calendaring software as having originated from a second user account distinct from the first user account, the second user account having sufficient privileges to make the modification to the electronic meeting definition; and providing the generated command to the electronic calendaring software to make the modification to the electronic meeting definition.

In another aspect of the below-described embodiment there may be provided a machine-readable medium storing instructions which, when executed by a processor of a computing device, may cause the computing device to: receive a command identifying the electronic meeting definition and a modification to be made thereto, the command originating from a first user account that is distinct from a meeting organizer account used to create the electronic meeting definition; based on the identified electronic meeting definition, determine that the first user account is a delegate account of the meeting organizer account for modifying the electronic meeting definition identified by the command; based on the determining, generate a command to make the modification to the electronic meeting definition, the generating resulting in generated command, the generated command being made to appear to the electronic calendaring software as having originated from a second user account distinct from the first user account, the second user account having sufficient privileges to make the modification to the electronic meeting definition; and provide the generated command to the electronic calendaring software to make the modification to the electronic meeting definition.

In yet another aspect of the below-described embodiment there may be provided a method may comprise: displaying a graphical user interface (GUI) containing: a first GUI element for selecting an electronic meeting definition created using a meeting organizer account using electronic calendaring software; and a second GUI element for selecting a user account to serve as a delegate account of the meeting organizer account for modifying the electronic meeting definition selected using the first GUI element; and based on a selection made using the first and second GUI elements, causing a data record to be stored for future use in determining whether commands from the user account to modify the electronic meeting definition shall be effected.

In yet another aspect of the below-described embodiment there may be provided a wireless communication device comprising: a processor; and memory interconnected with the processor storing instructions which, when executed by the processor, cause the device to: display a graphical user interface containing: a first GUI element for selecting an electronic meeting definition created using a meeting organizer account using electronic calendaring software; and a second GUI element for selecting a user account to serve as a delegate account of the meeting organizer account for modifying the electronic meeting definition selected using the first GUI element; and based on a selection made using the first and second GUI elements, cause a data record to be stored for future use in determining whether commands from the user account to modify the electronic meeting definition shall be effected.

### BRIEF DESCRIPTION OF DRAWINGS

In the figures which illustrate at an exemplary embodiment:

FIG. 1 is a schematic diagram of an exemplary system permitting designation of a delegate for modifying an electronic meeting definition defined using electronic calendaring software;

FIG. 2 is a schematic diagram of a data record stored within the system of FIG. 1 upon the designation of a delegate;

FIG. 3 is a sequence diagram illustrating interaction between various components of the system of FIG. 1 during system operation; and

FIGS. 4 -8 illustrate a graphical user interfaces for designation of a delegate that are presented at a wireless communication device of the system of FIG. 1.

### DESCRIPTION OF PREFERRED EMBODIMENTS

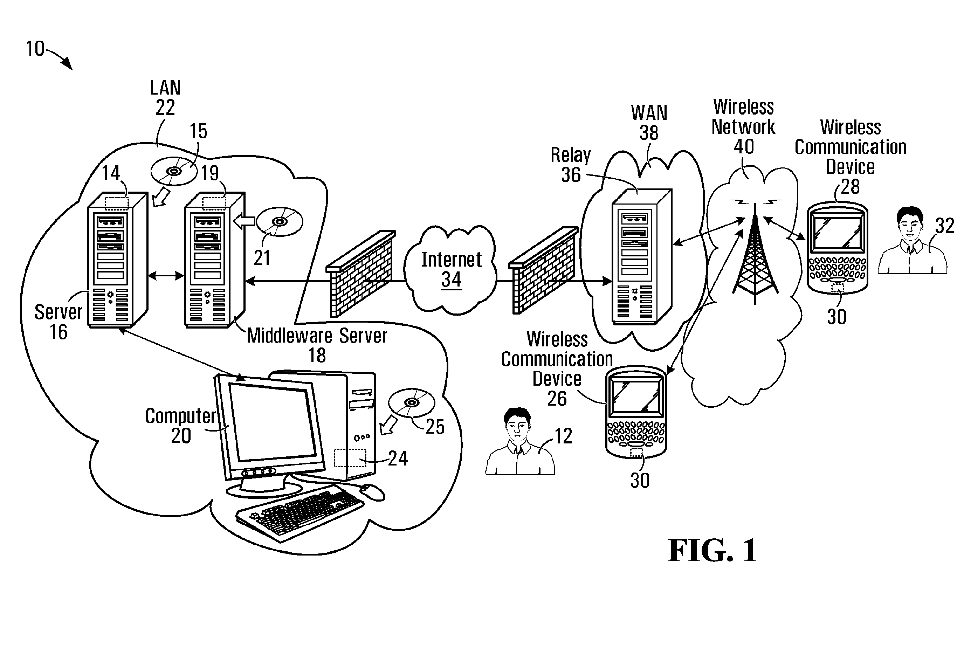

FIG. 1 schematically illustrates an exemplary system 10 that permits user 12 of electronic calendaring software 14 (which, in the present embodiment, is an electronic calendaring component of a collaborative software application, such as Microsoft® Exchange Server, Novell® GroupWise®, or IBM® Lotus Domino®), who has earlier used the software 14 to schedule a meeting with one or more other users of the software ("meeting invitees"), to designate one of those users as a delegate for the purpose of modifying the electronically scheduled meeting.

As shown in FIG. 1, the system includes a server 16 which executes the electronic calendaring software 14, as well as a middleware server 18, a computer 20, two wireless communication devices 26 and 28, and a number of other components as described hereinafter.

Server 16 is a conventional server executing conventional electronic calendaring software 14. The software 14 may be loaded into volatile or non-volatile memory of middleware server 16 from a machine-readable medium 15, such as an optical disk or magnetic storage medium, prior to its execution. The electronic calendaring software 14 maintains or distinguishes between accounts for different users and permits a meeting organizer 12 to electronically schedule a meeting using his/her account, such that meeting invitations are automatically sent to other users' accounts including the account of user 32. User accounts are accessed via client software applications executing on client computing devices. In the present embodiment, this includes client software application 24 executing on computer 20 and client software 30 executing on wireless communication device 26 and 28.

The middleware server 18 is a server executing middleware software 19 effecting automatic synchronization of users' collaborative software records (including electronic calendars) between server 16 and wireless communication devices 26 and 28, according to a "push" content delivery model. Middleware software 19 conventionally has full access (i.e. read/write/delete/create access) to the calendar of all users, including users 12 and 32, to facilitate its synchronization responsibilities. The synchronization responsibilities of software 19 may involve encrypting and compressing communication traffic with wireless communication devices 26 and 28 in a known manner. The middleware software 19 differs from conventional middleware software, however, in that it is designed to support the modification of electronic meeting definitions by delegate users as outlined above. The software 19 may be loaded into volatile or non-volatile memory of middleware server 18 from a machine-readable medium 21, such as an optical disk or magnetic storage medium, prior to its execution. Middleware server 18 is capable of intercommunication with server 16 by way of a local area network (LAN) 22, to which both devices are connected. The middleware server 18 is interconnected to the Internet 34 by way of a conventional firewall.

Computer 20 is a conventional computer, such as a Intel® or AMD™ processor-based desktop personal computer or laptop computer having a display such as a liquid crystal display. Computer 20 executes a client software application 24 having electronic calendaring capabilities that, in conjunction with electronic calendar software 14, permit users to schedule meetings with other users. The client software 24 has been enhanced from a conventional client software application, such as Microsoft® Outlook® or the like, in order to provide delegate designation capabilities, as will be described. The software 24 may be loaded into volatile or non-volatile memory of computer 20 from a machine-readable medium 25, such as an optical disk or magnetic storage medium, prior to its execution. Computer 20 is used by a first user 12 who will act as a meeting organizer. In the present embodiment the user 12 is named "Paul Manager" has accordingly has an electronic user account with username "pmanager". Computer 20 intercommunicates with server 16 by way of LAN 22.

Wireless communication devices 26 and 28 are two-way paging devices, each having an input device (a keyboard), an output device (a liquid crystal display), a processor in communication with volatile and non-volatile memory, and various other conventional components. In the illustrated embodiment, the first wireless communication device 26 is assigned to the meeting organizer 12, while the second wireless communication device 28 is assigned to a second user 32 whom the meeting organizer intends to designate as his delegate. In the present embodiment the second user 32 is named "John Smith" has accordingly has an electronic user account with username "jsmith". The memory of each of devices 26 and 28 stores client software application 30, which provides similar capabilities to those of client software application 24, but is designed for execution at a wireless computing device. The client software application 30 is designed to support a delegate designation capability, as described hereinafter. Both devices 26 and 28 intercommunicate with server 16 by way of middleware server 18, the public Internet 34, relay 36 within wide area network (WAN) 38, and a wireless network 40. More specifically, the middleware server 18 coordinates intercommunication between client software 30 at the wireless communication devices 26, 28 and electronic calendaring software 14 at server 16, e.g. for the purpose of synchronizing a remote copy of the user's electronic calendar at the wireless communication device 26, 28 with a centrally maintained electronic calendar at server 16.

Wide area network 38 hosts a relay 36 whose purpose is essentially to buffer electronic calendaring synchronization commands destined for wireless communication devices 26 and/or 28 while those devices are inaccessible (e.g. powered down or out of communication range of wireless network 40) and to forward the commands to the devices 26 and/or 28 once they have become accessible. Relay 36 may maintain information regarding a current network 40 with which the devices 26, 28 are communicating. WAN 38 is interconnected to the Internet 34 by way of a conventional firewall.

Wireless network 40 supports data communication between the relay 36 and the wireless communication devices 26 and 28. The network 40 may employ the Mobitex™, DataTAC™ or General Packet Radio Service (GPRS) mobile data communication technologies. In some embodiments, the network 40 may also support voice communication.

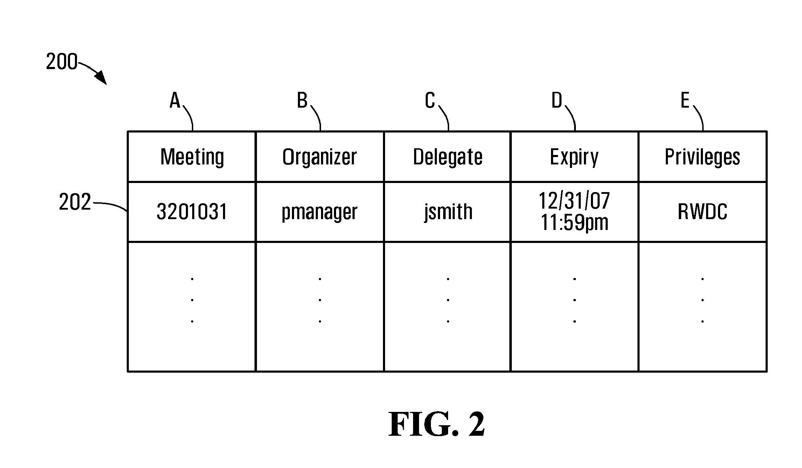

Referring to FIG. 2, a data record 202 stored within a table 200 of a rules database at middleware server 18 is illustrated. The record 200 has a meeting identifier field A, an organizer identifier field B, a delegate identifier field C, an expiry field D and a privileges field E. The record 200 is created upon the designation of user 32 as a delegate of meeting organizer 12. It is intended for use by the middleware server 18 for determining whether commands to modify an electronic meeting definition received from users other than the meeting organizer should be effected.

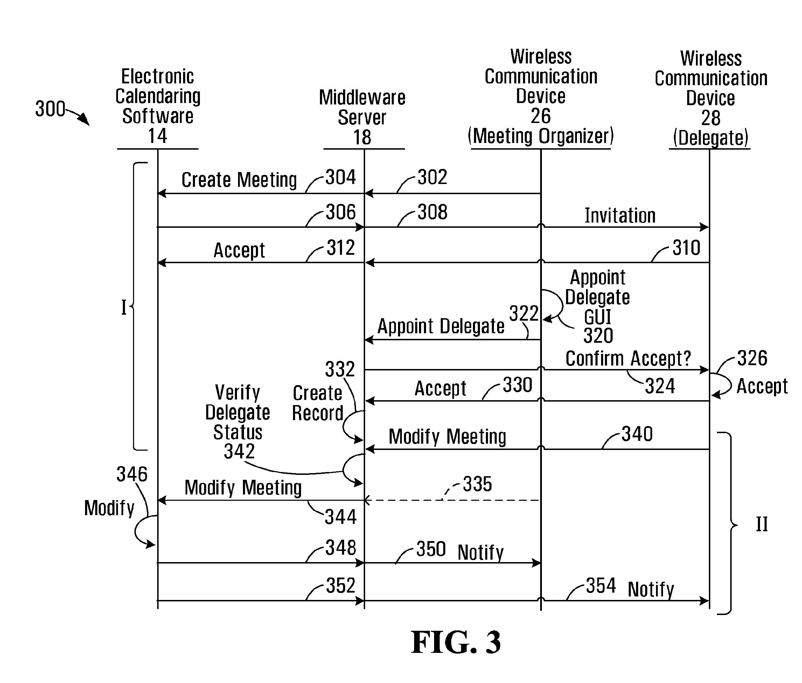

Referring to FIG. 3, a sequence diagram 300 illustrates the operation of the present embodiment in two phases: designation of a user as a delegate of a meeting organizer (phase I) and modification by the delegate of an electronic meeting definition previously defined by the meeting organizer (phase II). In particular, the illustrated sequence diagram 300 shows intercommunication between four components of system 10: electronic calendaring software 14, middleware server 18, wireless communication device 26 and wireless communication device 28, during system operation.

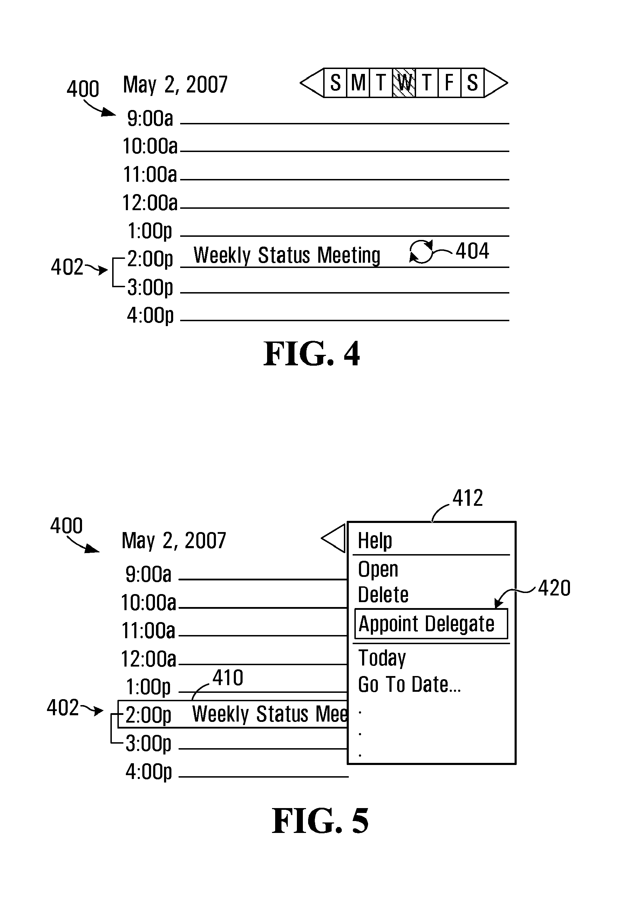

In phase I, the meeting organizer 12 initially interacts with the collaborative client software 30 at the wireless communication device 26 to schedule a meeting using the meeting organizer's electronic user account (the "meeting organizer account"). Using a graphical user interface 400 of software 30 that looks like an address book page (see FIG. 4), the meeting organizer may perform such conventional steps as selecting a time for the meeting, identifying a list of meeting invitees, and providing a textual label (e.g. "Weekly Status Meeting") for the meeting. The interaction causes a "create meeting" command 302 (FIG. 3) with the above-noted information to be sent from the device 26 to the middleware server 18, so as to cause an electronic meeting definition reflective of the scheduled meeting to be created within electronic calendaring software 14. The nature of the electronic meeting definition is specific to the electronic calendaring software 14, and may for example comprise a data structure, data record or instance of an object-oriented class. The command 302 is communicated to server 16 by way of wireless network 40, WAN 38, relay 36 and Internet 34, in a conventional manner. In some embodiments, the command 302 may conform to the proprietary Compressed iCalendar (CICAL) protocol that is conventionally used for calendar synchronization between certain types of wireless communication devices and middleware server 18.

Upon receiving the command 302, the middleware server 18 generates an equivalent command 304 in a proprietary format understood by electronic calendaring software 14 (i.e. "translates" the command 302 from a format understood by middleware server into a format that is understood by electronic calendaring software 14) and sends it to the server 16 for execution by electronic calendaring software 14. To connote the semantic equivalence of commands 302 and 304 (and other commands of FIG. 3), a convention is adopted in FIG. 3 whereby the arrows used to represent the sending of semantically equivalent commands are horizontally aligned head to tail within sequence diagram 300. Receipt of the command 304 causes the electronic calendaring software 14 to create an electronic meeting definition representative of the meeting.

Although not shown in FIG. 3, meeting organizer 12 could have alternatively scheduled the meeting using client software application 24 executing at computer 20, rather than client software 30 executing at wireless communication device 26. In this case, the "create meeting" command would have been sent from computer 20 to server 16, and commands 302 and 304 would not have been sent.

When scheduling the meeting, the meeting organizer 12 specifies a list of meeting invitees including user 32 (FIG. 1) by way of their account usernames. As a result, the act of scheduling the meeting automatically causes an invitation to be sent to each invitee, including user 32. By virtue of the fact that user 32 has a wireless communication device 28 executing client software 30, the invitation is pushed to the device 28 (by way of middleware server 18, Internet 34, relay 36 within WAN 38, and wireless network 40) through conventional calendar synchronization techniques. This is illustrated in FIG. 3 as a first communication 306 from server 16 to middleware server 18 and a second communication 308 from middleware server 18 to the device 28. Like commands 302 and 304, communications 306 and 308 are aligned within sequence diagram 300 to connote their semantic equivalence. It will be appreciated that communication 306 may actually represent active monitoring of electronic calendaring software 14 by middleware server 18.

Assuming that the user 32 accepts the meeting invitation through conventional interaction with client software 30 at device 28, a communication 310 reflective of this acceptance is sent from device 28 to the middleware server 18, and is relayed by server 18 as communication 312 to the electronic calendaring software 14, again through conventional techniques. When the user 32 has accepted the invitation, the scheduled meeting appears as an appointment 402 within the GUI 400 (FIG. 4) at the device 28 of the user 32. The scheduled meeting also appears as an appointment within the GUI 400 at the device 26 of the meeting organizer 30, but this is not contingent upon acceptance of the invitation by user 32. If the meeting is a recurring meeting, an icon 404 (FIG. 4) is displayed within GUI 400 at both devices 26 and 28 to indicate this fact.

At this stage, the meeting organizer 12, using features of client software 30 which distinguish it from conventional versions of such software, interacts with GUI 400 at wireless communication device 26 for the purpose of appointing a delegate for modifying the electronic meeting definition associated with the newly scheduled meeting (320, FIG. 3). Specifically, referring to FIG. 5, the meeting organizer 12 highlights the appointment 402 as shown at 410 and selects appropriate controls (e.g. depresses a thumbwheel) at the wireless communication device 26 to cause a menu 412 to be displayed. The menu 412 includes a number of menu items representing user-selectable actions. Some of the actions are meeting-specific, i.e. pertain to the currently highlighted appointment (e.g. Open, Delete, Appoint Delegate) while other actions are not specific to the currently selected appointment (e.g. Help, Today, Go to Date). All menu items but the Appoint Delegate menu item 420 are conventional.

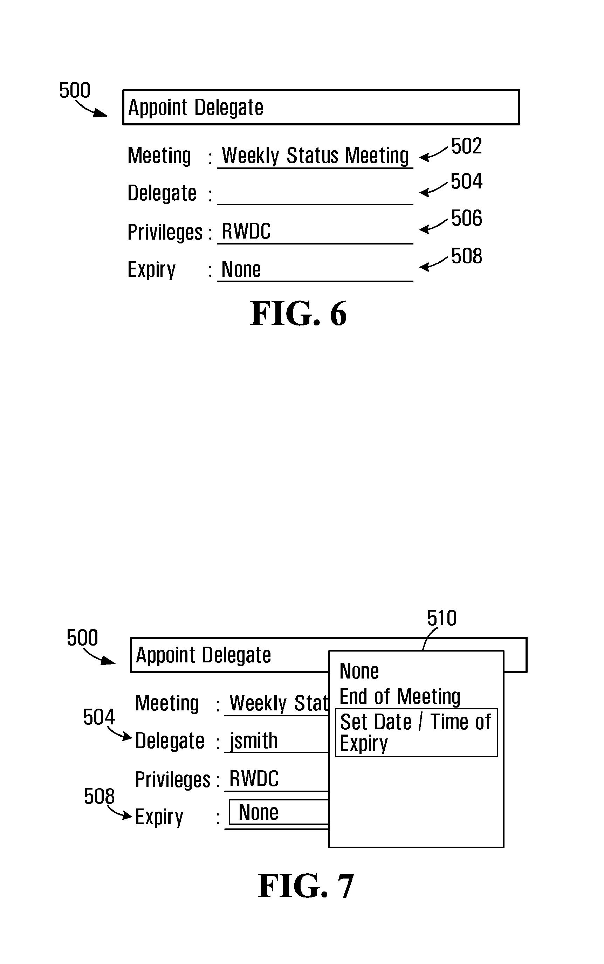

The meeting organizer selects Appoint Delegate menu item 420. When this is done, an Appoint Delegate GUI 500 of FIG. 6 is displayed. The GUI 500 prompts the meeting organizer for various delegation parameters including the identity of the user to act as a delegate, the delegated privileges and the expiry time of the delegation (if any). More specifically GUI 500 includes a meeting identifier field 502, a delegate identifier field 504, a delegation expiry time field 506 and a privileges field 508. These fields are initially populated with the default values shown in FIG. 6.

Meeting identifier field 502 identifies the electronic meeting definition within electronic calendaring software 14 in respect of which a delegate is to be appointed. By virtue the meeting organizer's earlier selection of appointment 402 in the GUI 400 of FIG. 5 prior to the selection of the "Appoint Delegate" menu item 420, the relevant meeting definition is known to be the one associated with appointment 402. Accordingly, the textual label of the associated electronic meeting definition, i.e. "Weekly Status Meeting", appears within field 502. If desired, the user may change the value in field 502 to indicate another electronic meeting definition. This may involve selecting a meeting from a list of previously scheduled meetings. In some embodiments, it may be possible to invoke the Appoint Delegate GUI 500 without having first selected an appointment (i.e. meeting) using GUI 400. In such embodiments, the value of field 502 may initially be blank.

Delegate identifier field 504 identifies the user to be appointed as a delegate for modifying the electronic meeting definition identified by meeting identifier field 502. In the present embodiment, the delegate identifier field 504 is initially blank. However, in some embodiments field 504 may initially be populated with a default value identifying, e.g., the username of the first meeting invitee or of a pre-designated default delegate user. In some embodiments, a GUI element such as a drop-down list may be used to provide a list of meeting invitees by their usernames (user accounts), from which one user may be selected as the delegate.

Privileges field 506 specifies the exact privileges to be granted to the delegate for modifying the meeting definition. By default, read/write/delete/create privileges are granted. This permits the delegate to change one or more of the start time of the meeting, the end time of the meeting, the duration of the meeting and documents posted in conjunction with the meeting, as well as to delete the meeting outright or create a new meeting.

Delegation expiry time field 508 specifies an expiry time for the delegation after which the user is to cease being a delegate for modifying the electronic meeting definition in question. Completion of this field is optional. If left blank, the delegate designation remains effective until it is revoked by the meeting organizer.

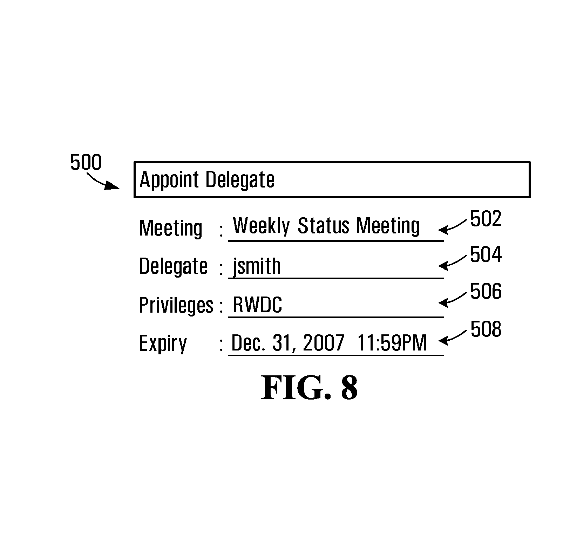

The setting of delegation parameters is illustrated in FIG. 7. As illustrated, the only two fields whose values are changed from their default values are delegate field 504 and delegation expiry time field 508. In field 504, the username "jsmith" is specified. The value of field 508 is set by selecting that field and activating a control to cause menu 510 to be displayed. The menu 510 lists three menu items (options). Selection of the first menu item, "None", indicates that the delegation is to persist until it is revoked by the meeting organizer. Selection of the second menu item, "End of meeting", indicates that the delegation shall expire at the scheduled end time of the meeting (which, in the example, is 3:00 PM, May 2, 2007 - see FIG. 4). Selection of the third menu item, "Set Date/Time of Expiry", permits specification of a date and time at which the delegation shall expire. In the present example, it is assumed that the third option is selected, as shown in FIG. 7, and that an expiry time of December 31, 2007, 11:59 PM is specified. The resultant values of the delegation parameters are as shown in FIG. 8.

Upon confirmation by the meeting organizer 12 of the desired set of delegation parameters, as shown in FIG. 8 (which confirmation may be performed by selecting an "OK" button or similar GUI element), the wireless communication device 26 sends an "appoint delegate" command 322 (FIG. 3), along with these delegation parameters, to the middleware server 18. The command may have the following structure: "ACCOUNT pmanager GRANTS RWDC ACCESS FOR MEETING WITH ID=3201031 to ACCOUNT jsmith UNTIL 20071231 23:59".

Receipt of this command 322 at middleware server 18 causes middleware server 18 to send a communication 324 to the wireless communication device 28 for seeking confirmation from the prospective delegate 32 as to whether the designation is accepted. Assuming that the user 32 accepts the designation at 326, confirmation 330 of the acceptance is communicated to the middleware server 18. Receipt of confirmation 330 triggers special processing 332 (FIG. 3) at middleware server 18 for configuring the server 18 to communicate any future commands originating from delegate 32 as though they originate from the meeting organizer 12. This special processing 332 constitutes creating of a data record 202 (FIG. 2), described above, within table 200 of the rules database at middleware server 18. This concludes phase I of the system operation shown in FIG. 3.

It is noted that, in some embodiments, the middleware server 18 may not seek confirmation of the designation, but may instead simply send a notification message to the wireless communication device 28 of the delegate 32 simply to inform him/her of the designation.

In phase II, the delegate 32 enters a command to modify the electronic meeting definition using software 30 at wireless communication device 28. Command entry may involve using GUI 400 (FIG. 4) to select the appointment 402 and then causing a menu similar to the menu 412, but without the "Appoint Delegate" option (which is reserved for the meeting organizer 12 in the present embodiment), to be displayed. To modify the electronic meeting definition, the delegate 32 selects the "Open" menu option within menu 412. This causes a GUI page to be displayed with appointment details, such as start time, end time, invitees, recurrence, a list of posted documents, and so forth. By virtue of his/her appointment as delegate, user 32 is able to make changes to the electronic meeting definition using this GUI page in the same fashion as the meeting organizer 12 could do using software 30 at his/her wireless communication device 26. Specifically, the delegate 32 can make one or more modifications to the electronic meeting definition including: changing the meeting start time, meeting end time or meeting duration; adding to, removing from or changing a set of documents posted in conjunction with the electronic meeting definition; adding to, removing from or changing a list of meeting invitees; deleting the electronic meeting definition; causing a unique meeting to become a recurring meeting (or vice-versa); creating a new electronic meeting definition; adding/deleting new attachments; adding/modifying hyperlinks in the body (notes modifications); modifying reminder times; modifying free/busy status; changing importance (e.g. low/medium/high); and changing attendee status (required, tentative, etc.)

Once the modification(s) has (have) been fully entered, a "modify meeting" command 340 (FIG. 3) indicating the identity of the delegate 32 (jsmith), the identity of the electronic meeting definition to be modified (3201031), and the modification(s) to be made is sent from the device 28 to the middleware server 18. Upon receiving command 340 from the account of user jsmith, the middleware server 18 performs a lookup in its rules database to determine whether the indicated user jsmith is a delegate (delegate account) for making the specified modifications the specified electronic meeting definition 3201031 and to confirm that the delegation has not expired (342, FIG. 3). When this determination is made in the positive, the middleware server 18 generates a version 344 of command 340 that is understood by the electronic calendaring software 14 and which appears to originate from the account of meeting organizer 12, as indicated by the dotted arrow 335 of FIG. 3. The identity of the meeting organizer 12 ("pmanager") from whom the command 344 is made to ostensibly originate may be taken from field B of record 202 (FIG. 2). The command 344 is sent to the electronic calendaring software 14 at server 16, which accepts and performs the command (346) as if it originated from the account of meeting organizer 12. This is possible because the middleware server 18 has full access to the calendar of all users, including user 12. Because the delegate is authorized to modify electronic meeting definitions on a meeting-specific basis, the security of any other electronic meeting definitions scheduled by the meeting organizer (to which delegate access may not be desired) is enhanced, and inadvertent modification of such other electronic meeting definitions by the delegate may be prevented. Also, to the extent that the delegated authority has an associated expiry time, the possibility of later inadvertent modification of the meeting definition by the delegate is eliminated. As well, when an expiry time has been specified, automatic withdrawal of the delegate's authority reduces the burden on a meeting organizer by eliminating the need for positive action to be taken to withdraw the delegate's authority once access to the electronic meeting definition is no longer desirable. Finally, to the extent that the delegation is performed via a wireless communication device, it may be conveniently performed without regard to the presence of a wired computer terminal.

Thereafter, conventional notifications 348, 350 and 352, 354 of the meeting change are sent to the wireless communication devices 26 and 28, respectively, in the same fashion as they would be sent if the meeting organizer 12 had modified the electronic meeting definition. Phase II of system operation is thus concluded.

If the command 340 had arrived from a non-delegate user account or had arrived after the specified delegation expiry time, the command 340 would have been rejected during operation 342 (FIG. 3), and command 344 would not have been generated or sent. Upon delegation expiry, the record 202 (FIG. 2) is removed from the table 200.

It is noted that the meeting-specific delegate appointment by meeting organizer 12 as described above in conjunction with FIG. 3 could have been performed using the client software 24 at computer 20 rather than client software 30 at wireless communication device 26. The client software 24 provides a similar user interface to that shown in FIGS. 5-8 for appointing a delegate. The result of the designation would the same: record 202 would be created in table 200 (FIG. 2).

In some embodiments, requests to modify a meeting that are received from a wired computer 20 executing the client software application 24, even if from the account of a delegate, may be rejected, because the request may bypass the middleware server 18, which is the component that "fools" the electronic calendaring software 14 into modifying the definitions. This may be the case when it is anticipated that delegates will only modify meetings using their wireless communication devices. However, in other embodiments, a mechanism may be in place to ensure that such requests are honored, even from wired computers. For example, all requests to modify a meeting that are generated by a client software application 24 executing on a wired computer 20 could be "intercepted" by the middleware server 18, regardless of whether the requests are from the account of a delegate or another user. The interception could be implemented by physically intercepting data destined for electronic calendaring software 14 or through the use of "callbacks" to the middleware server 18 from the from the electronic calendaring software 14 and/or server 16 which are triggered by the receipt of such a request. Such callback mechanisms are well understood in the art, although they are not known to be used in this context.

As should now be appreciated, the above-described approach addresses various shortcomings of known systems. In particular, modification privileges are granted to electronic meeting definitions on a meeting-specific basis, which prevents a delegate from inadvertently modifying other electronic meeting definitions (as may occur when a universal delegate is designated). Delegated privileges may be made to expire if desired. As well, both the appointment of a delegation and the delegate's subsequent modification of the relevant electronic meeting definition may be performed from a wireless communication device-based client. As a result, these tasks may even be performed from a meeting room which lacks conventional networked computers, e.g. during an ongoing meeting.

As will be appreciated by those skilled in the art, modifications can be made to the above-described embodiments without departing from the essence of the invention. For example, it is indicated above that the command 344 generated by the middleware server 18 for causing the electronic calendaring software 14 to make the desired modification(s) to the relevant electronic meeting definition is made to appear as having originated from the meeting organizer. This is not absolutely required. In some embodiments, the command could be made to appear as having originated from the account of another user, such as a "super-user" having the necessary privileges to make any desired modification to the relevant electronic meeting definitions.

Other modifications will be apparent to those skilled in the art and, therefore, the invention is defined in the claims.

## Claims

1. A method of modifying an electronic meeting definition created using electronic calendaring software (14), the method comprising:
receiving a command (340) identifying the electronic meeting definition and a modification to be made thereto, said command originating from a first user account that is distinct from a meeting organizer account used to create the electronic meeting definition;
based on said identified electronic meeting definition, determining (342) that said first user account is a delegate account of said meeting organizer account for modifying the identified electronic meeting definition;
based on said determining, generating a command (344) for causing the electronic calendaring software (14) to make the modification to said electronic meeting definition, said generating resulting in a generated command, said generated command being made to appear (335) to said electronic calendaring software (14) as having originated from a second user account distinct from said first user account, said second user account having sufficient privileges to make said modification to said electronic meeting definition; and
providing said generated command to said electronic calendaring software (14) to make said modification to said electronic meeting definition (346).

2. The method of claim 1 wherein said second user account is the meeting organizer account.

3. The method of claim 1 or claim 2 wherein said first user account is a meeting invitee account.

4. The method of any one of claims 1 to 3 wherein said determining further comprises determining that a delegation time period is unexpired.

5. The method of claim 4 wherein said delegation time period is specific to said electronic meeting definition.

6. The method of claim any one of claims 1 to 5 wherein said electronic meeting definition represents a recurring meeting.

7. The method of any one of claims 1 to 6 wherein said command is to modify at least one of a meeting start time, a meeting end time, a meeting duration, and at least one document posted in association with said meeting definition.

8. The method of any one of claims 1 to 7 wherein said electronic calendaring software (14) is a component of a collaborative software application.

9. The method of any one of claims 1 to 8 wherein said providing comprises sending said generated command (344) to a separate computing device (16) executing said electronic calendaring software (14).

10. A machine-readable medium (21) storing instructions which, when executed by a processor of a computing device (18), causes said computing device to perform the steps of the method of any one of claims 1 to 9.

11. A computing device (18) comprising:
a processor; and
memory interconnected with said processor storing instructions which, when executed by said processor, cause said device to implement the steps of the method of any one of claims 1 to 9.

12. A method comprising:
displaying a graphical user interface 'GUI' (500) containing:
a first GUI element (502) for selecting an electronic meeting definition created using a meeting organizer account using electronic calendaring software; and
a second GUI element (504) for selecting a user account to serve as a delegate account of said meeting organizer account for modifying the electronic meeting definition selected using said first GUI element (502);
and
based on a selection made using said first and second GUI elements, causing a data record (202) to be stored for future use in determining whether commands from said user account to modify said electronic meeting definition shall be effected.

13. The method of claim 12 wherein said second GUI element (504) is for selecting said user account from a list of meeting invitee accounts.

14. The method of claim 12 or claim 13 wherein said graphical user interface (500) further contains a GUI element (508) for specifying a delegation expiry time for use in said determining.

15. The method of any one of claims 12 to 14 wherein said graphical user interface (500) further includes a GUI element (506) for specifying privileges to be granted to said delegate account for use in said determining.

16. A machine-readable medium (25) storing instructions which, when executed by a processor of a computing device (20, 26), causes said computing device to perform the steps of the method of any one of claims 12 to 15.

17. A computing device (20, 26) comprising:
a processor; and
memory interconnected with said processor storing instructions which, when executed by said processor, cause said device to implement the method of any one of claims 12 to 15.

18. The computing device of claim 17 wherein said computing device is a wireless communication device (26).

19. The computing device (26) of claim 18 wherein said causing comprises wirelessly sending a communication to cause a separate computing device (18) to store said data record.

20. The computing device (26) of claim 19 wherein said electronic calendaring software (14) executes on a server (16) and wherein said separate computing device (18) is responsible for synchronizing calendar information between said server (16) and said wireless communication device (26).

## Amended claims

### Amended claims in accordance with Rule 137(2) EPC.

**1.** A method of modifying an electronic meeting definition created using electronic calendaring software (14), the method comprising:
receiving a command (340) identifying the electronic meeting definition and a modification to be made thereto, said command originating from a first user account that is distinct from a meeting organizer account used to create the electronic meeting definition;
based on said identified electronic meeting definition, determining (342) that said first user account is a delegate account of said meeting organizer account for modifying the identified electronic meeting definition and that a delegation time period specific to said electronic meeting definition is unexpired;
based on said determining, generating a command (344) for causing the electronic calendaring software (14) to make the modification to said electronic meeting definition, said generating resulting in a generated command, said generated command being made to appear (335) to said electronic calendaring software (14) as having originated from a second user account distinct from said first user account, said second user account having sufficient privileges to make said modification to said electronic meeting definition; and
providing said generated command to said electronic calendaring software (14) to make said modification to said electronic meeting definition (346).

**2.** The method of claim 1 wherein said second user account is the meeting organizer account.

**3.** The method of claim 1 or claim 2 wherein said first user account is a meeting invitee account.

**4.** The method of claim any one of claims 1 to 3 wherein said electronic meeting definition represents a recurring meeting.

**5.** The method of any one of claims 1 to 4 wherein said command is to modify at least one of a meeting start time, a meeting end time, a meeting duration, and at least one document posted in association with said meeting definition.

**6.** The method of any one of claims 1 to 5 wherein said electronic calendaring software (14) is a component of a collaborative software application.

**7.** The method of any one of claims 1 to 6 wherein said providing comprises sending said generated command (344) to a separate computing device (16) executing said electronic calendaring software (14).

**8.** The method of any one of claims 1 to 7, further comprising:
displaying a graphical user interface 'GUI' (500) containing:
a first GUI element (502) for selecting an electronic meeting definition created using a meeting organizer account using electronic calendaring software;
a second GUI element (504) for selecting a user account to serve as a delegate account of said meeting organizer account for modifying the electronic meeting definition selected using said first GUI element (502);
a third GUI element (508) for specifying a delegation expiry time specific to the selected electronic meeting definition; and
based on a selection made using said first, second and third GUI elements, causing a data record (202) to be stored for future use in determining whether commands from said user account to modify said electronic meeting definition shall be effected.

**9.** The method of claim 8 wherein said second GUI element (504) is for selecting said user account from a list of meeting invitee accounts.

**10.** The method of claim 8 or claim 9 wherein said third GUI element (508) has a user-selectable option for specifying that said delegation expiry time shall be a scheduled end time of said electronic meeting definition.

**11.** The method of any one of claims 8 to 10 wherein said graphical user interface (500) further includes a GUI element (506) for specifying privileges to be granted to said delegate account for use in said determining.

**12.** A computing device (20) comprising:
a processor; and
memory interconnected with said processor storing instructions which, when executed by said processor, cause said device to implement the method of any one of claims 1 to 7.

**13.** A computing device (26) comprising:
a processor; and
memory interconnected with said processor storing instructions which, when executed by said processor, cause said device to display a graphical user interface 'GUI' (500) containing:
a first GUI element (502) for selecting an electronic meeting definition created using a meeting organizer account using electronic calendaring software;
a second GUI element (504) for selecting a user account to serve as a delegate account of said meeting organizer account for modifying the electronic meeting definition selected using said first GUI element (502);
a third GUI element (508) for specifying a delegation expiry time specific to the selected electronic meeting definition; and
based on a selection made using said first, second and third GUI elements, causing a data record (202) to be stored for future use in determining whether commands from said user account to modify said electronic meeting definition shall be effected.

**14.** The computing device of claim 13 wherein said second GUI element (504) is for selecting said user account from a list of meeting invitee accounts.

**15.** The computing device of claim 13 or claim 14 wherein said third GUI element (508) has a user-selectable option for specifying that said delegation expiry time shall be a scheduled end time of said electronic meeting definition.

**16.** The computing device of any one of claims 13 to 15 wherein said graphical user interface (500) further includes a GUI element (506) for specifying privileges to be granted to said delegate account for use in said determining.

**17.** The computing device of any one of claims 13 to 16 wherein said computing device is a wireless communication device (26).

**18.** The computing device (26) of claim 17 wherein said causing comprises wirelessly sending a communication to cause a separate computing device (18) to store said data record.

**19.** The computing device (26) of claim 18 wherein said electronic calendaring software (14) executes on a server (16) and wherein said separate computing device (18) is responsible for synchronizing calendar information between said server (16) and said wireless communication device (26).

**20.** A machine-readable medium (25) storing instructions which, when executed by a processor of a computing device (20, 26), causes said computing device to become configured as a computing device (20,26) in accordance with any one of claims 12 to 19.
